# EUROPEAN PATENT APPLICATION

(11) **EP 0 963 970 A2**
(43) Date of publication of application: **15.12.1999**
(21) Application number: 99111208.7
(22) Date of filing: 09.06.1999
(51) Int. Cl.: C05F 17/00, A01D 90/04, A01C 3/04

(54) **Cutter-mixer-feeder wagon for treating materials suitable for making compost**

(30) Priority: 10.06.1998 IT VI980113
(71) Applicant: Loppoli, Giuseppe, 35010 Grantorto (PD) (IT)
(72) Inventor: Loppoli, Giuseppe, 35010 Grantorto (PD) (IT)
(74) Representative: Bonini, Ercole

(57) **Abstract**

The invention produces a cutter-mixer-feeder wagon (1) for treating materials suitable for producing compost, comprising a container (2) with one or more internal screw feeders (5) equipped with blades for cutting the material to be treated and a lifting device (7) which collects the material to be treated placed outside the wagon and arranges it on a conveyor belt (6) which transfers it into the container (2). The lifting device (7) comprises a screw feeder (9) on top of which there is a revolving shaft (10), supported by a casing (8) and provided with blades (11,12) for cutting and loading the material onto the conveyor belt (6).

## Description

The invention concerns a cutter-mixer-feeder wagon for the treatment, production and transport of materials suitable for preparing compost.

It is a known fact that compost is a fertiliser which is obtained by mixing together, after due cutting, solid organic waste and green agricultural waste, such as leaves, branches, pruning waste and similar. The mixture is obtained after cutting and must be sufficiently homogeneous so that, when left in the open, it ferments under the action of aerobic micro-organisms.

In order to facilitate the ripening of the compost, the cut and mixed material, arranged in heaps, is turned over with a certain frequency to oxygenate the innermost parts and allow the aerobic micro-organisms to act with the necessary intensity.

When the compost is ripe, it is taken and transported to be stored or packed for marketing.

There are machines on the market which cut and mix the materials for making compost, and which also move the mixture arranged in heaps and turn it periodically for aerobic treatment.

Machines of this type are described in the applications VI96A000022 and VI97A000046, registered in the name of the same applicant who is filing this patent.

In particular, the machines described in the aforesaid applications are self-propelled machines which comprise a cutter-mixer-feeder wagon of the type already known, equipped with a container with internal screw feeders, on the front of which there is a device for lifting the material to be treated. The lifting device is provided with screw feeders which lift the material arranged in heaps and convey it to a conveyor belt that is positioned on the wagon and transfers the material into the container.

According to the execution described in application VI96A000022, the lifting device is provided with screw feeders which face each other and are set at angles to one another following a truncated conical arrangement that converges on the conveyor belt.

According to the execution described in application VI97A000046, the lifting device is provided with a pair of screw feeders, overlapping and parallel to each other, arranged transversely with respect to the conveyor belt.

In both versions, the lifting device presents the drawback that the screw feeders fitted, because of their structural shape and the way they are arranged, are not able to perform any cutting action on the product with which they come into contact. They are therefore suitable only for lifting materials that have been previously cut and mixed, laid in heaps, and conveying them to the conveyor belt which transfers them into the container.

This represents a limitation for these wagons since, as the material to be treated cannot be loaded into the container directly by means of the lifting device, this must be done using cranes or fork-lift trucks. This results in an increase in treatment costs due to the need to use a greater number of equipment.

The aim of this invention is to overcome the above mentioned drawbacks.

The aim of the invention is the implementation of a cutter-mixer-feeder wagon equipped with a device for lifting the material to be treated which, while lifting the material, cuts it at the same time. This aim is achieved through the construction of a cutter-mixer-feeder wagon for treating materials suitable for producing compost which, according to the main claim, comprises:
- a container with at least one top opening for loading the material to be treated and at least one side opening for unloading the treated material;
- one or more screw feeders located inside the container, provided with blades for cutting the material to be treated;
- a lifting device for collecting the material to be treated laid outside the wagon;
- at least one conveyor belt for loading into the container the material collected by the lifting device, with which it communicates by means of a loading mouth;
- a chassis associated with the wagon, for supporting the conveyor belt;
   and is characterized in that the above-mentioned lifting device also comprises at least one screw feeder with at least one pair of axially opposed spirals turning in opposite directions and at least one revolving shaft cooperating with said at least one screw feeder, said at least one screw feeder and said at least one revolving shaft being supported by a casing fixed to said chassis and being provided with blades for cutting the material and loading it onto said conveyor belt.

The lifting device fitted on the cutter-mixer-feeder wagon of the invention thus allows the material to be cut and loaded into the container on the wagon without making use of fork-lift trucks, cranes or equivalent means.

This offers the advantage of cutting down processing costs for the production of compost.

The aims and advantages described above will be better highlighted in the description of one among many possible applications of the invention in question, illustrated in the attached drawings, wherein:

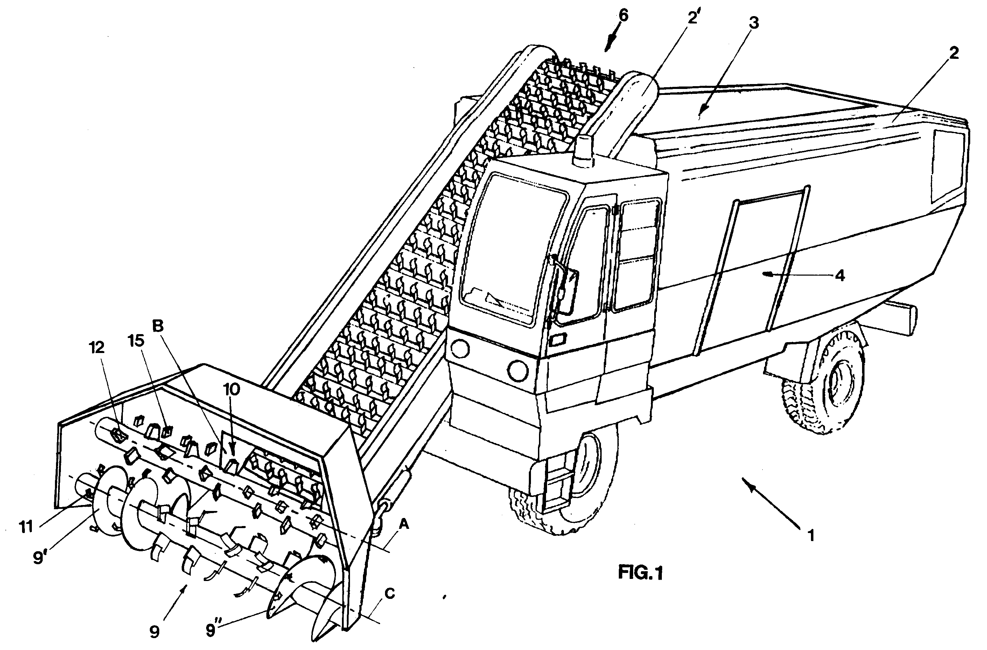

- fig. 1 shows the axonometric view of the cutter-mixer-feeder wagon of the invention;

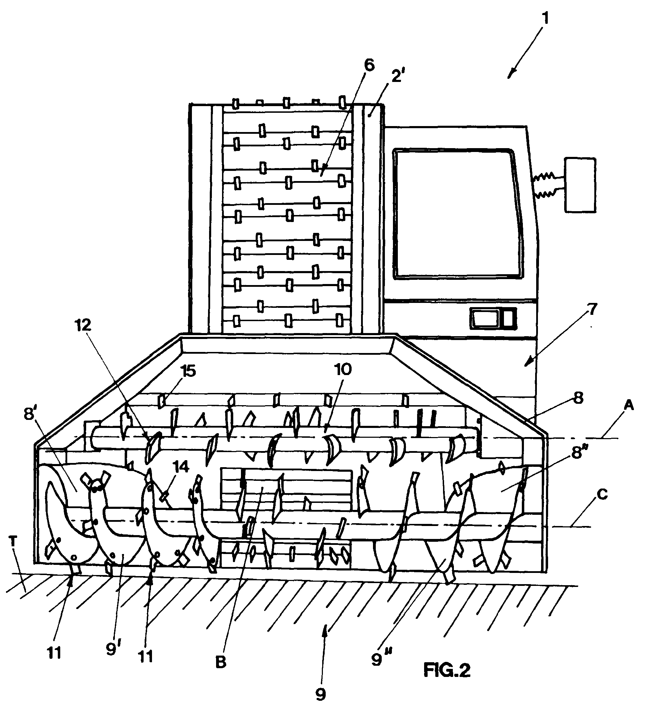

- fig. 2 shows the front view of the cutter-mixer-feeder wagon of the invention;

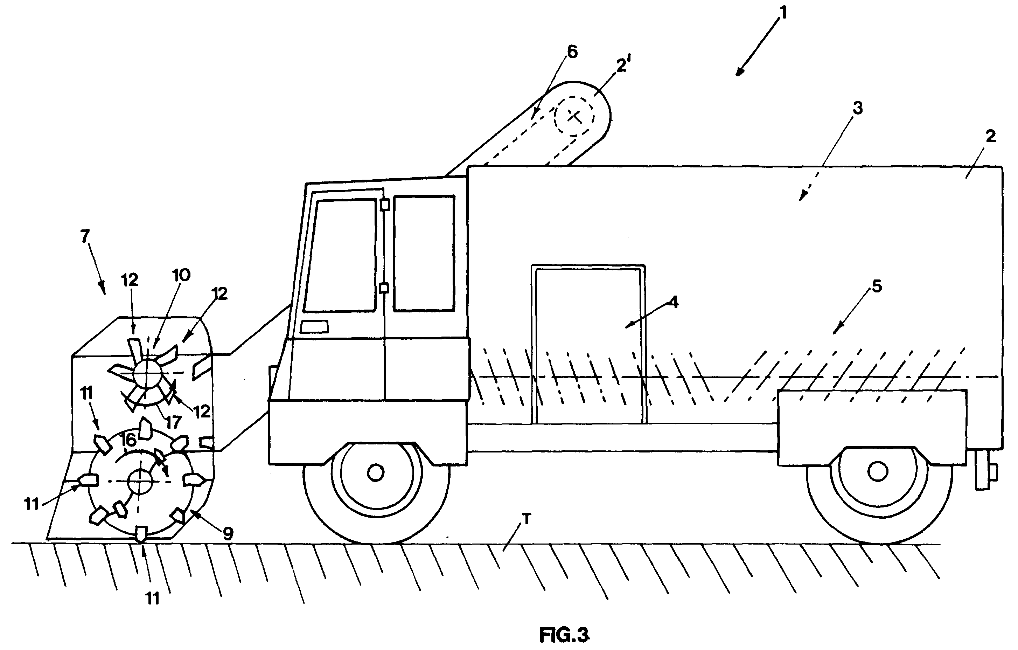

- fig. 3 shows the side view of the wagon of fig. 1 with a cross section of the lifting device;

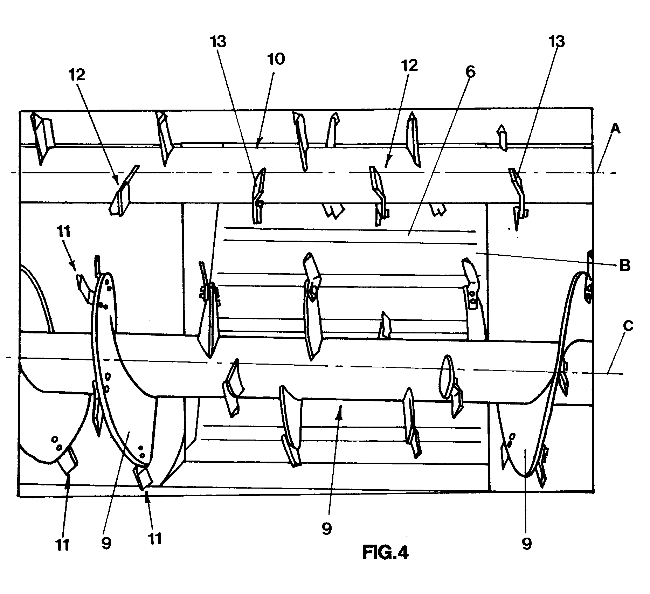

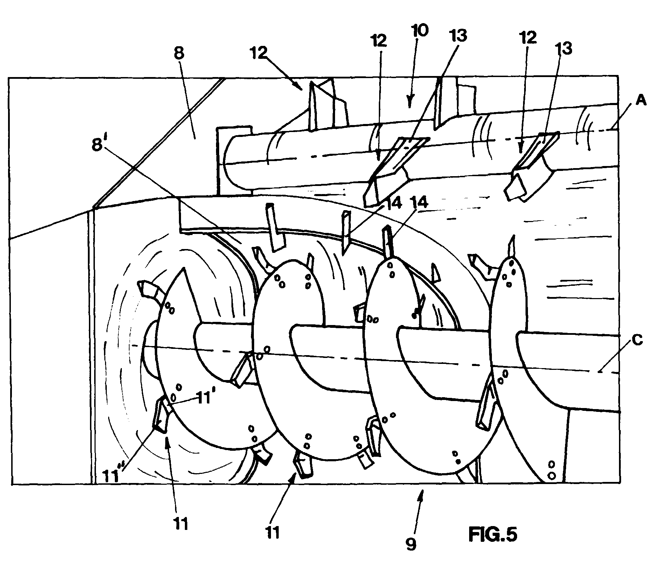

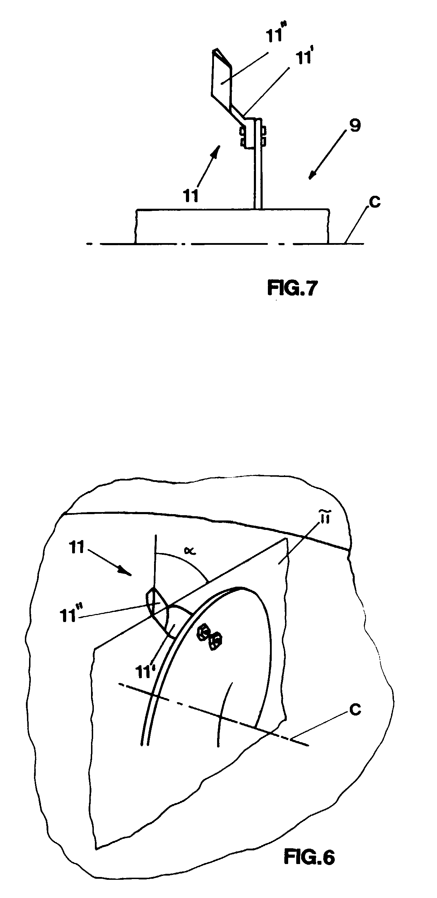

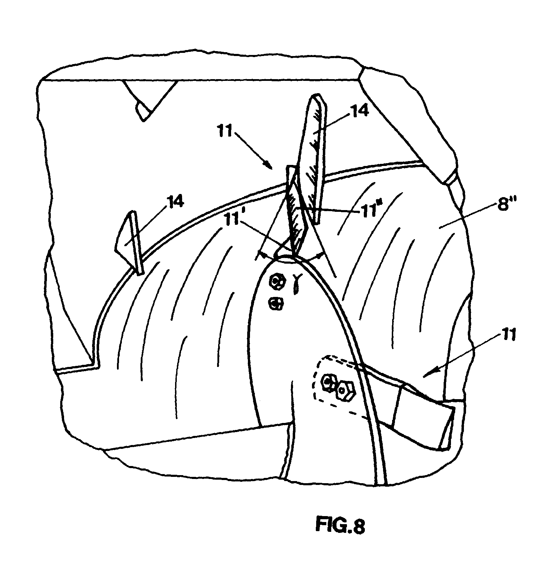

- figures 4, 5, 6, 7, 8, 9 and 10 show detailed views of the lifting device applied onto the wagon of the invention.

As may be seen in the figures, the cutter-mixer-feeder wagon of the invention, indicated as a whole by 1, comprises a container 2 with a top opening 3 for loading the material to be treated, a side opening 4 for unloading the treated material and one or more internal screw feeders, schematically represented and indicated as a whole by 5, provided with blades for cutting the material.

An inclined chassis 2' is fixed onto the container 2 and is associated with a conveyor belt indicated by 6. The top part of the conveyor belt 6 ends above the top opening 3 of the container 2, while its bottom part is in communication with a device for lifting the material to be treated which is outside the container 2.

A characteristic feature of the cutter-mixer-feeder wagon of the invention lies in the fact that the lifting device 7 comprises a screw feeder 9 and a revolving shaft 10 which are overlapped and supported by a casing 8 fixed onto the chassis 2' that is associated with the conveyor belt 6.

The screw feeder 9 and the revolving shaft 10 are equipped with blades 11 and 12, respectively, for cutting the material and loading it onto the conveyor belt 6.

The screw feeder, indicated as a whole by 9, is equipped with two opposed spirals 9' and 9'' which converge in the central area of the casing 8 where there is the loading mouth B of the conveyor belt 6.

The blades 11 of the conveyor belt 9, as may be seen in detail in the figures from 5 to 8, protrude radially from the respective spirals and each of them has a substantially L-shaped angular profile, being composed of a first flat part 11' which protrudes sideways from the surface of the spiral and of a second flat part 11'', connected to the former, which develops on a plane π perpendicular to the longitudinal axis C of the screw feeder 9.

This second flat part 11'', moreover, is placed at an angle α with respect to the plane π which contains the surface of the spiral and is perpendicular to the longitudinal axis C of the screw feeder 9.

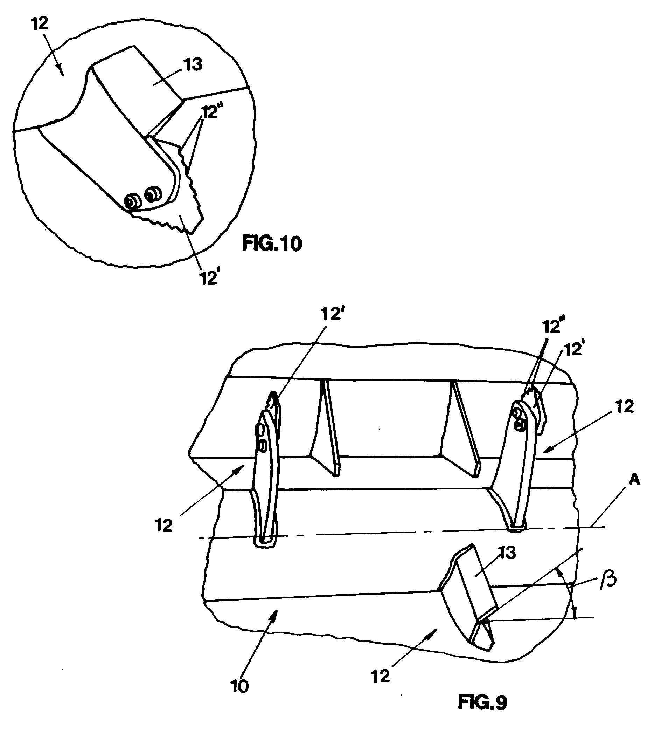

The blades 12 are substantially at right angles with respect to the longitudinal axis A of the revolving shaft 10 and protrude radially from the shaft. At the end of each of them there is an element with a substantially triangular profile 12' removably fixed with screws and provided with teeth 12'' visible in detail in fig. 10. Some blades 12 are also provided with a side extension 13 visible in detail in fig. 9, inclined at an angle β with respect to the direction parallel to the longitudinal axis of rotation A of the shaft 10.

The blades 11 and 12, respectively of the screw feeder 9 and of the revolving shaft 10 cooperate with the corresponding counterblades, respectively 14 and 15, belonging to the casing 8, to cut the product.

The casing 8, in particular, has curved zones 8' and 8'' at the sides, each shaped in such a way as to copy the profile of the respective spiral 9' and 9'' of the screw feeder 9 to help convey the material during the cutting and collecting phase.

In operation, the screw feeder 9 and the revolving shaft 10 are set rotating in opposed directions, respectively 16 and 17.

During rotation the first part 11' of each blade 11 of the screw feeder 9 creates, with the corresponding counterblade 14, an angle of impact γ visible in fig. 8 which causes the cutting effect on the product. In the same way a further cutting effect is performed by the blades 12 of the revolving shaft 10 which cooperate with the corresponding counterblades 15. At the same time the second flat part 11'' of each blade 11 of the screw feeder 9 performs a scraping effect on the ground T, aiding collection of the material.

At the same time as all these cutting and scraping actions, each second flat part 11'' of each blade 11 and each side extension 13 of each blade 12 perform a pushing effect on the cut material, which helps transfer it onto the conveyor belt 6 through the loading mouth B.

The conveyor belt 6 then transfers the lifted and suitably cut material into the container 2 where it is further shredded by the internal screw feeders 5.

It may therefore be understood that the perfected cutter-mixer-feeder wagon, as described, achieves all the set aims.

Even though the wagon of the invention has been described with reference to the version illustrated in the drawings, it may clearly be subjected to numerous modifications and variations that fall within the area of safeguarding expressed in the following claims.

## Claims

1. Cutter-mixer-feeder wagon (1) for treating materials suitable for producing compost and comprising:
- a container (2) with at least one top opening (3) for loading the material to be treated and at least one side opening (4) for unloading the treated material;
- one or more screw feeders (5) located inside the container (2), provided with blades for cutting the material to be treated;
- a lifting device (7) for collecting the material to be treated laid outside the wagon;
- at least one conveyor belt (6) for loading into the container (2) the material collected by the lifting device (7), with which it communicates by means of a loading mouth (B);
- a chassis (2') associated with the wagon, for supporting the conveyor belt (6); **characterized in that** said lifting device (7) comprises at least one screw feeder (9) equipped with at least one pair of axially opposed spirals (9', 9'') turning in opposite directions and at least one revolving shaft (10) cooperating with said at least one screw feeder (9), said at least one screw feeder (9) and said at least one revolving shaft (10) being supported by a casing (8) fixed to said chassis (2') and being provided with blades (11, 12) for cutting the material and loading it onto said conveyor belt (6).

2. Wagon (1) according to claim 1), **characterized in that** said lifting device (7) comprises a single revolving shaft (10) overlapping a respective screw feeder (9), said shaft (10) and said screw feeder (9) rotating in opposed directions.

3. Wagon (1) according to claim 1), **characterized in that** each of said spirals (9', 9'') has a length less than half the total length of the screw feeder (9) to which they belong, so that a free central zone corresponding to said loading mouth (B) is defined in said screw feeder (9).

4. Wagon (1) according to claim 1), **characterized in that** each of said blades (11, 12) protrudes radially from the respective screw feeder (9) and from the respective revolving shaft (10).

5. Wagon (1) according to claim 4), **characterized in that** each blade (11) of said screw feeder (9) has a substantially L-shaped angular profile, being composed of a first flat part (11') which protrudes sideways from the surface of the spiral (9', 9'') to which it is fixed and of a second flat part (11''), connected to the former, which develops on a plane (π) perpendicular to the longitudinal rotation axis C of the screw feeder (9).

6. Wagon (1) according to claim 5), **characterized in that** each second flat part (11'') of said blade (11) is placed at an angle (α) with respect to the plane (π) perpendicular to the longitudinal axis (C) of the screw feeder (9).

7. Wagon (1) according to claim 6), **characterized in that** each second flat part (11'') of said blade (11) cooperates with a corresponding counterblade (14) fixed onto said casing (8) with which it forms an angle (γ).

8. Wagon (1) according to claim 4), **characterized in that** each blade (12) of said revolving shaft (10) is placed substantially at a right angle to the longitudinal axis (A) of said shaft (10).

9. Wagon (1) according to claim 8), **characterized in that** each blade (12) has at the end a cutting element (12') with a substantially triangular profile provided with teeth (12'').

10. Wagon (1) according to claim 9), **characterized in that** said cutting element (12') with a substantially triangular profile is removably fixed to said blade (12) with fastening elements.

11. Wagon (1) according to claim 8), **characterized in that** one or more of said blades (12) has an extension (13) inclined at an angle (β) with respect to the longitudinal axis (A) of said revolving shaft (10).

12. Wagon (1) according to claim 4), **characterized in that** each blade (12) cooperates with a corresponding counterblade (15) fixed onto said casing (8).
